# EUROPÄISCHE PATENTSCHRIFT

(11) **EP 3 984 764 B1**
(45) Veröffentlichungstag und Bekanntmachung des Hinweises auf die Patenterteilung: **23.07.2025**
(21) Anmeldenummer: 21020499.6
(22) Anmeldetag: 07.10.2021
(51) Int. Cl.: B60B 27/02, B60B 27/04, F16D 41/36

(54) **FREILAUFNABE MIT FEDER AUS KUNSTSTOFF MIT ZELLIGER STRUKTUR**
FREEWHEEL HUB WITH PLASTIC SPRING WITH CELLULAR STRUCTURE
MOYEU À ROUE LIBRE POURVU DE RESSORT EN MATIÈRE PLASTIQUE À STRUCTURE CELLULAIRE

(30) Priorität: 16.10.2020 DE 102020127381
(43) Veröffentlichungstag der Anmeldung: 20.04.2022
(73) Patentinhaber: SRAM Deutschland GmbH, 97424 Schweinfurt (DE)
(72) Erfinder: Göbel, Joachim, 97279 Prosselsheim (DE)

(56) Entgegenhaltungen:
- EP-A1- 3 590 815
- CN-A- 110 181 997
- DE-A1- 102012 020 472
- DE-A1- 102015 009 143
- DE-U1- 202014 001 591

## Beschreibung

Die vorliegende Erfindung betrifft eine Freilaufnabe für ein Fahrrad, welche eine Nabenachse, eine drehbar an der Nabenachse gelagerte Nabenhülse, einen drehbar an der Nabenachse gelagerten Antreiber, der mit wenigstens einer Ritzelanordnung verbindbar ist, sowie eine zwischen der Nabenhülse und dem Antreiber angeordnete Freilaufeinrichtung umfasst.

Die Freilaufeinrichtung umfasst einen drehmomentübertragend mit der Nabenhülse koppelbaren oder gekoppelten ersten Kupplungsring und einen drehmomentübertragend mit dem Antreiber koppelbaren oder gekoppelten zweiten Kupplungsring, wobei die beiden Kupplungsringe einander zugewandte Axialverzahnungen aufweisen. Weiterhin umfasst die Freilaufeinrichtung eine Vorspanneinrichtung, welche dazu ausgebildet und angeordnet ist, die beiden Kupplungsringe axial aufeinander zu vorzuspannen, wobei die Vorspanneinrichtung eine Federanordnung mit wenigstens einem Federelement aufweist.

Ein derartiger Freilauf wird auch als Axialfreilauf oder Zahnscheibenfreilauf bezeichnet.

Eine gattungsgemäße Freilaufnabe ist beispielsweise aus der Druckschrift

DE 198 47 73 A1 bekannt. Diese beschreibt eine Freilaufnabe, bei der die Vorspanneinrichtung durch zwei Schraubendruckfedern aus Stahl gebildet ist. Die Druckschrift DE 20 2014 001591 U1 offenbart auch eine gattungsgemäße Freilaufnabe.

Aufgrund fertigungstechnischer Einschränkungen bei der Herstellung von Stahlfedern, insbesondere im Hinblick auf das Wickelverhältnis, können diese jedoch nur für Kupplungsringe mit einem begrenzten Durchmesser und folglich einer begrenzten Anzahl von Kupplungszähnen eingesetzt werden. Aus diesem Grund sind nur verhältnismäßig große Eingriffswinkel realisierbar, etwa 20° bis 15°. Auch die Kräfte, die auf die Kupplungszähne wirken, sind aufgrund des begrenzten Durchmessers relativ groß, was zu einem raschen Verschleiß führt. Weiterhin sind die Betriebsgeräusche bei Freiläufen mit Stahlfedern im Allgemeinen sehr laut.

Als Alternative sind Freilaufnaben mit magnetischen Vorspanneinrichtungen bekannt, beispielsweise aus der DE 10 2015 009 143 A1.

Diese weisen im Vergleich zu den Freilaufnaben mit mechanischen Vorspanneinrichtungen jedoch einen deutlich komplexeren und damit kostenintensiveren Aufbau auf, erfordern hohe Genauigkeiten und enge Toleranzen.

Zudem ist die von den Magneten auf die Kupplungsringe aufgebrachte Kraft nicht gleichmäßig um den Umfang der Nabenachse verteilt sondern wirkt sehr punktuell. Bei höheren Geschwindigkeiten und insbesondere bei schnellem Einfedern des Hinterrads bei einem vollgefederten Fahrrad (MTB-Fully) fangen die Kupplungsringe an, Taumelbewegungen auszuführen, die zur Folge haben, dass manchmal nur einzelne Zähne der Axialverzahnungen eingreifen und diese dadurch beschädigt werden. Mit zunehmender Betriebszeit kann dies bis zum Totalausfall des kompletten Freilaufs fortschreiten.

Vor diesem Hintergrund besteht die Aufgabe der vorliegenden Erfindung darin, die gattungsgemäße Freilaufnabe im Hinblick auf Verschleiß, Betriebsgeräusch und Herstellungsaufwand zu verbessern.

Hierzu wird erfindungsgemäß vorgeschlagen, anstelle einer Stahlfeder ein Federelement aus einem Kunststoff mit zelliger Struktur zu verwenden, insbesondere auf Basis von Polyurethan, vorzugsweise ein gemischtzelliges Polyurethan-Elastomer.

Beispielsweise kann ein technischer Schaumstoff verwendet werden, wie er von der Firma BASF unter der Bezeichnung Cellasto^{®} oder von der Firma Getzner unter der Bezeichnung Sylomer^{®} vertrieben wird. Prototypen der erfindungsgemäßen Feder wurden beispielsweise aus Sylomer^{®} vom Typ SR28 gefertigt.

Polyurethane sind fett- und ölbeständig, temperaturunabhängig sowie kostengünstig herzustellen und deswegen sehr gut für den Einsatz als Federn in Axialfreiläufen geeignet.

Im Vergleich zur Anfederung mit Federn aus Stahl können größere Kupplungsdurchmesser realisiert werden, die kleinere Eingriffswinkel und geringere Kräfte zur Folge haben. Der Verschleiß wird verringert und die Betriebslaufzeit wird entsprechend erhöht. Die Dämpfungseigenschaften des Materials bewirken überdies eine Geräuschreduzierung im Betrieb.

Im Vergleich zum Magnetfreilauf kann die Anfederung gleichmäßiger auf die Planfläche des Kupplungsrings bzw. der Kupplungsringe aufgebracht werden.

Des Weiteren ist der Aufbau des erfindungsgemäßen Freilaufes sehr einfach, erfordert keine hohen Genauigkeiten oder enge Toleranzen und ist dadurch kostengünstig herzustellen. Die nachfolgend noch genauer beschriebenen Federelemente können aus vorgefertigtem Platten-Material zum Beispiel mittels Wasserstrahlschneiden sehr einfach hergestellt werden.

Im Vergleich zum Magnetfreilauf, bei dem eine aufwändige zerspanende Nachbearbeitung der Kupplungsringe und der Nabenhülse nötig ist, um die einzelnen Magnete geeignet positionieren zu können, wird der Fertigungsaufwand des Freilaufs insgesamt deutlich reduziert.

Für eine gleichmäßige Verteilung der Federkraft kann vorgesehen sein, dass die Federanordnung eine Mehrzahl von, vorzugsweise gleichartigen, Federelementen umfasst, die um den Umfang der Nabenachse verteilt angeordnet sind, bevorzugt mit jeweils gleichen Winkelabständen voneinander.

Erfindungsgemäß ist vorgesehen, dass das Federelement oder jedes der Federelemente einen bogenförmigen Abschnitt aufweist, dessen konvexe Seite dazu eingerichtet ist, in axialer Richtung gegen einen der Kupplungsringe zu drücken, um die beiden Kupplungsringe aufeinander zu vorzuspannen, wenn das Federelement in die Freilaufnabe eingebaut ist.

Gemäß einem bevorzugten Ausführungsbeispiel ist der bogenförmige Abschnitt dabei als Streifenabschnitt mit im Wesentlichen konstanter Breite und Dicke ausgebildet. Derartige Strukturen können besonders einfach aus einer flachen Schaumstoff-Platte ausgeschnitten werden, etwa durch Wasserstrahl-Schneiden. Dabei kann die Breitenrichtung des Streifenabschnitts der Dicke der Platte entsprechen.

Weiter ist der bogenförmige Abschnitt vorzugsweise um eine Achse gekrümmt, die ungefähr parallel zur Breitenrichtung des Streifenabschnitts bzw. im eingebautem Zustand ungefähr radial verläuft.

Die resultierende Federkraft wird dabei zum einen durch materialabhängige Faktoren beeinflusst, also beispielsweise durch die Art des Kunststoff sowie Form und Größe der Poren, andererseits durch geometrieabhängige Faktoren, bei einem bogenförmigen Abschnitt unter anderem etwa durch Bogenform, Bogenradius und Streifendicke. Durch geeignete Kombination dieser Faktoren kann die gewünschte Federkraft auf einfache Weise eingestellt werden.

Für die Funktion des Freilaufes werden nur verhältnismäßig geringe axiale Rückstellkräfte benötigt. Für die Vorspannung werden beispielsweise 0,2 bis 0,5 N und im Betrieb des Freilaufs etwa 1 N benötigt.

Es hat sich herausgestellt, dass solche geringen Rückstellkräfte aufgrund einer Kombination aus zelligem Material und geeigneter Geometrie der Federelemente erreicht werden können, was zudem in vorteilhafter Weise zu einer Reduktion der Betriebsgeräusche führt.

Dies gilt insbesondere, wenn die Federanordnung so ausgelegt ist, dass in erster Linie die Biegesteifigkeit, und weniger eine Kompression des Kunststoffs, die für den Freilauf benötigten Federkräfte hervorbringt. In anderen Worten ist die Federanordnung bevorzugt so ausgelegt, dass bei Anwendung einer Anpresskraft von 0,2N bis 0,5N in axialer Richtung auf die Federanordnung diese zwar verbogen, dabei die zellige Struktur des Kunststoffs aber nicht wesentlich komprimiert wird. Ohne sich hierdurch festlegen zu wollen, wird davon ausgegangen, dass die zellige Struktur des Kunststoffs die Biegesteifigkeit der Federelemente in geeigneter Weise reduziert.

Eine besonders flexible Verwendung der Federelemente, etwa für Kupplungsringe mit unterschiedlichem Durchmesser, ist ermöglicht, denn erfindungsgemäß ist die Federanordnung aus mehreren, gleichartigen und separat ausgebildeten Federelementen gebildet.

Dabei kann jedes Federelement als D-Ring oder in Form eines Bogens mit abgewinkelten Längsenden ausgebildet sein. Auch andere Formen sind denkbar, etwa rechteckige oder winklige, solange diese eine Verbiegung bzw. Rückstellung des eingebauten Federelements in axialer Richtung zulassen.

Um die Einbaulage der einzelnen Federelemente festzulegen, ist dabei bevorzugt, dass diese in entsprechende Vertiefungen eingesetzt sind, wobei diese Vertiefungen in einer axialen Fläche, also einer Fläche mit axialem Normalenvektor, der Nabenhülse oder des Antreibers ausgebildet sind. Auch andere Möglichkeiten der Fixierung sind denkbar. Beispielsweise könnten die einzelnen Federelemente in eine Umfangsnut der Nabenhülse oder des Antreibers eingelegt werden, in der geeignete Anschläge vorgesehen sind, zwischen denen die Federelemente eingeklemmt werden können.

Der Montageaufwand ist erheblich reduziert**,** indem erfindungsgemäß die mehreren Federelemente einstückig und vorzugsweise in Form eines zusammenhängenden Streifens miteinander verbunden sind, der die Federanordnung bildet.

Da das verwendete Kunststoffmaterial hinreichend biegsam ist, kann der Streifen mit einer festgelegten Anzahl von bogenförmigen Abschnitten, die durch planare Abschnitte miteinander verbunden sind, zunächst aus einer flachen Platte herausgeschnitten und dann, beispielsweise von Hand, um die Nabenachse herum gebogen und in eine entsprechende kreisförmige Nut eingelegt werden, die in einer axialen Fläche von Nabenhülse oder Antreiber vorgesehen ist.

Hierbei ist allerdings zu beachten, dass der Streifen so eingelegt werden sollte, dass er sich im Betrieb nicht in unerwünschter Weise verformt. Hierzu können entsprechende Strukturen, etwa Anschläge oder Vorsprünge, in der Nabenhülse oder dem Antreiber vorgesehen sein.

Ein korrekter Einbau der Vorspanneinrichtung kann auf einfache Weise dadurch gewährleistet bzw. vereinfacht werden, dass die Vorspannrichtung weiter einen Haltering aufweist, der dazu ausgebildet ist, die Positionen der einzelnen Federelemente relativ zueinander festzulegen. Der Haltering ist vorzugsweise aus einem Kunststoff gefertigt und kann für einen zusammenhängenden Streifen mit mehreren Federelementen oder für separate Federelemente ausgelegt sein.

Gemäß einem bevorzugten Ausführungsbeispiel ist vorgesehen, dass der Halterring eine ringförmige Basis und eine Mehrzahl von um den Umfang der Basis verteilte und radial von dieser abstehende Halteelemente umfasst, welche die Federanordnung abschnittsweise axial auf einer Seite überdecken und vorzugsweise radial von innen und außen umgreifen.

Diese Konstruktion bietet sich insbesondere für den vorstehend beschriebenen Streifen mit abwechselnd angeordneten bogenförmigen Abschnitten und planaren Abschnitten an, der so in den Haltering eingelegt werden kann, dass die Halteelemente jeweils die planaren Abschnitte überdecken bzw. umgreifen.

Zusätzlich kann vorgesehen sein, dass die Vorspanneinrichtung weiter einen Deckelring umfasst, der so an dem Haltering montierbar ist, dass die Federanordnung wenigstens abschnittsweise, insbesondere im Bereich der planaren Abschnitte, zwischen dem Haltering und dem Deckelring aufgenommen ist und gemeinsam mit dem Haltering und dem Deckelring eine fest zusammenhängende Baugruppe bildet. So wird verhindert, dass die Federanordnung aus dem Haltering herausfällt, und die Vorspanneinrichtung kann auf besonders einfache Weise als Ersatzteil gehandhabt werden.

Im Folgenden wird die vorliegende Erfindung anhand einiger ausgewählter Ausführungsbeispiele erläutert, die in den beigefügten Figuren illustriert sind.

### Dabei zeigen:

- Fig. 1: ein erstes Ausführungsbeispiel einer erfindungsgemäßen Freilaufnabe in einer Längsschnittansicht,
- Fig. 2: eine Ausschnittvergrößerung des in Fig. 1 mit II bezeichneten Bereichs,
- Fig. 3: eine Explosionsdarstellung der Vorspanneinrichtung der Freilaufnabe aus Fig. 1,
- Fig. 4: eine perspektivische Ansicht der Vorspanneinrichtung aus Fig. 3 im zusammengesetzten Zustand,
- Fig. 5: eine Seitenansicht der Federanordnung der Vorspanneinrichtung aus Fig. 3, bevor diese in den Haltering eingelegt wird,
- Fig. 6: eine Draufsicht auf die Unterseite des Gegenstands von Fig. 5,
- Fig. 7: eine Ausschnittvergrößerung des in Fig. 5 mit VII bezeichneten Bereichs,
- Fig. 8: eine Explosionsdarstellung wesentlicher Komponenten eines zweiten Ausführungsbeispiels einer erfindungsgemäßen Freilaufnabe, und
- Fig. 9: eine Explosionsdarstellung wesentlicher Komponenten eines dritten Ausführungsbeispiels einer erfindungsgemäßen Freilaufnabe.

Aus Gründen der Übersichtlichkeit sind nicht in jeder Figur alle Merkmale mit Bezugszeichen versehen, sondern in erster Linie nur diejenigen Merkmale, die zur Erläuterung der jeweiligen Figur benötigt werden. Dies gilt insbesondere, wenn eine Figur mehrere gleichartige Merkmale enthält.

Gleiche oder einander entsprechende Merkmale der verschiedenen Ausführungsbeispiele sind jeweils mit den gleichen Bezugszeichen versehen, und das zweite und dritte Ausführungsbeispiel werden vorwiegend nur insoweit erläutert, als sie sich vom ersten Ausführungsbeispiel unterscheiden, auf dessen Beschreibung ansonsten verwiesen wird.

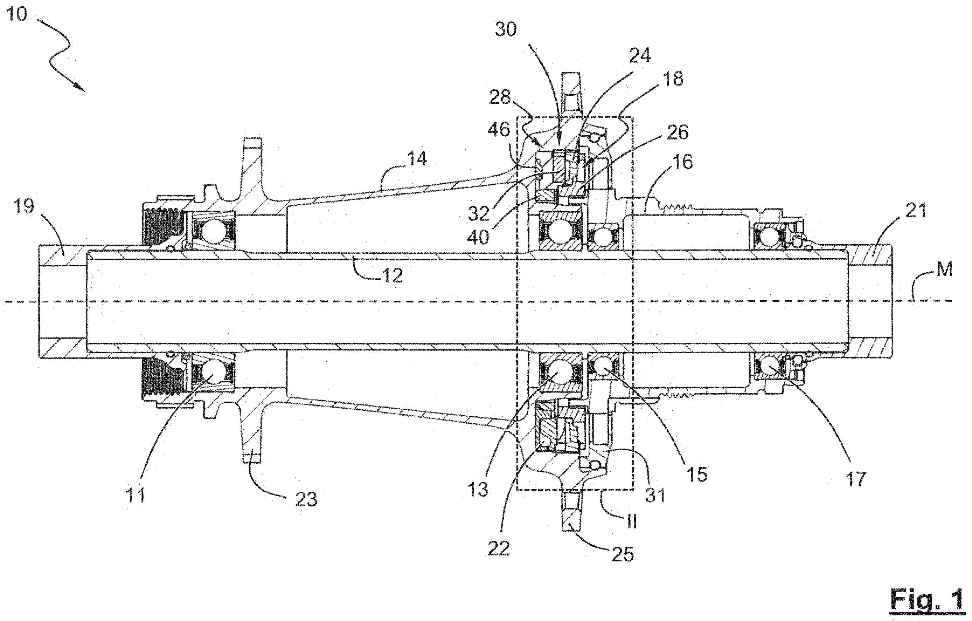

Figur 1 zeigt eine Längsschnittansicht eines ersten Ausführungsbeispiels einer erfindungsgemäßen Freilaufnabe 10, deren Längsachse M in der Schnittebene enthalten ist. Der Begriff "axial" bezieht sich in dieser Anmeldung, sofern nicht anders angegeben, stets auf diese Längsachse M, die im eingebauten Zustand mit der Hinterradachse des Fahrrads zusammenfällt.

Die Freilaufnabe 10 umfasst eine Nabenachse 12, die in bekannter Weise am Rahmen eines Fahrrads fixiert werden kann. An der Nabenachse 12 ist über zwei Wälzlager 11 und 13 eine Nabenhülse 14 und über zwei weitere Wälzlager 15 und 17 ein Antreiber 16 jeweils drehbar gelagert. In axialer Richtung sind Nabenhülse 14 und Antreiber 16 über Verschlusselemente 19 und 21 an der Nabenachse 12 befestigt.

An dem Längsende der Nabenhülse 14, welches dem Antreiber 16 zugewandt ist, weist die Nabenhülse eine umlaufende axiale Nut 22 auf, welche die nachstehend genauer beschriebene Freilaufeinrichtung 18 aufnimmt. Ferner weist die Nabenhülse 14 zwei Speichen-Flansche 23 und 25 auf, an denen Speichen in bekannter Weise anbringbar sind.

Der Antreiber 16 ist mit einer hier nicht dargestellten Ritzelanordnung verbindbar, über die Drehmoment in den Antreiber 16 eingeleitet und über diesen auf die Nabenhülse 14 und damit auf das Hinterrad des Fahrrads übertragen werden kann.

Zwischen der Nabenhülse 14 und dem Antreiber 16 ist die Freilaufeinrichtung 18 in der Nut 22 angeordnet und durch ein weiteres Verschlusselement 31 dicht nach außen abgeschlossen.

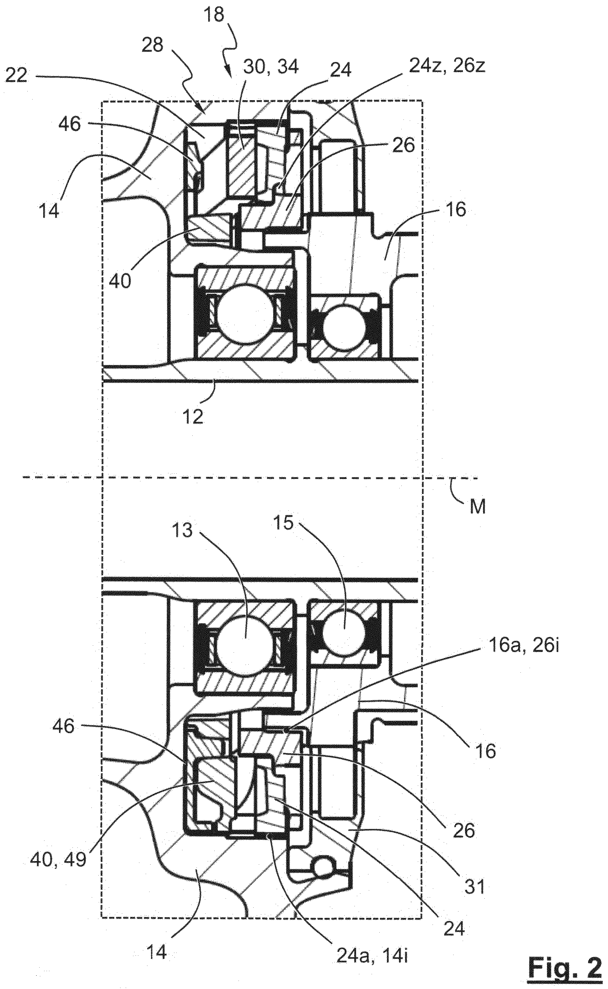

Die Freilaufeinrichtung 18 ist besser in der in Figur 2 dargestellten Ausschnittvergrößerung erkennbar. Sie umfasst einen ersten Kupplungsring 24, einen zweiten Kupplungsring 26 sowie eine Vorspanneinrichtung 28.

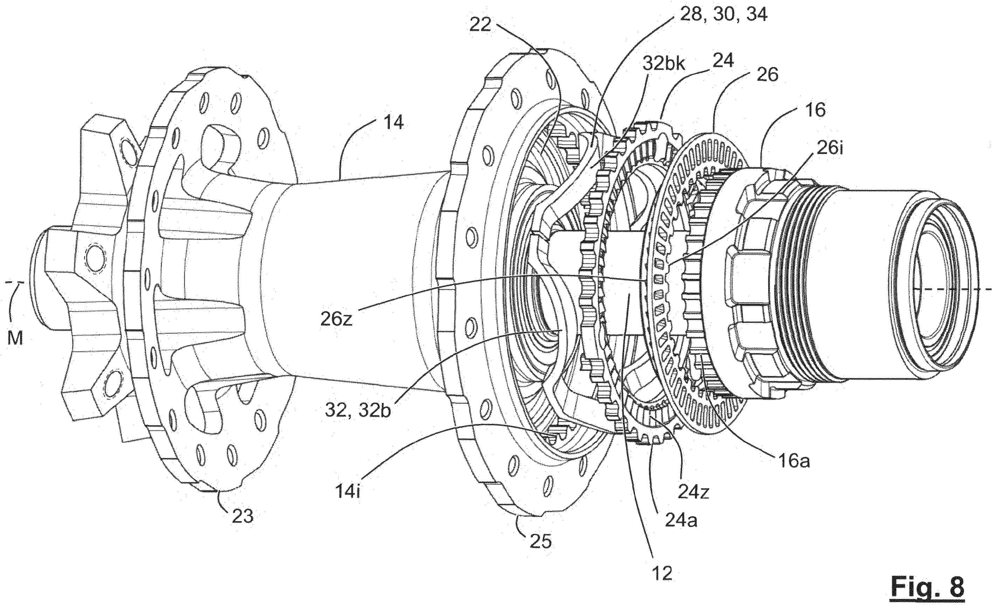

Der erste Kupplungsring 24 ist mit der Nabenhülse 14 drehmomentübertragend gekoppelt, und der zweite Kupplungsring 26 ist mit dem Antreiber 26 drehmomentübertragend gekoppelt. Die hierzu an den jeweiligen Bauteilen vorgesehenen radialen Außenverzahnungen 24a bzw. 16a sowie Innenverzahnungen 14i bzw. 26i sind am besten in der perspektivischen Ansicht in Figur 8 des zweiten Ausführungsbeispiels erkennbar, sind jedoch für alle Ausführungsbeispiele identisch.

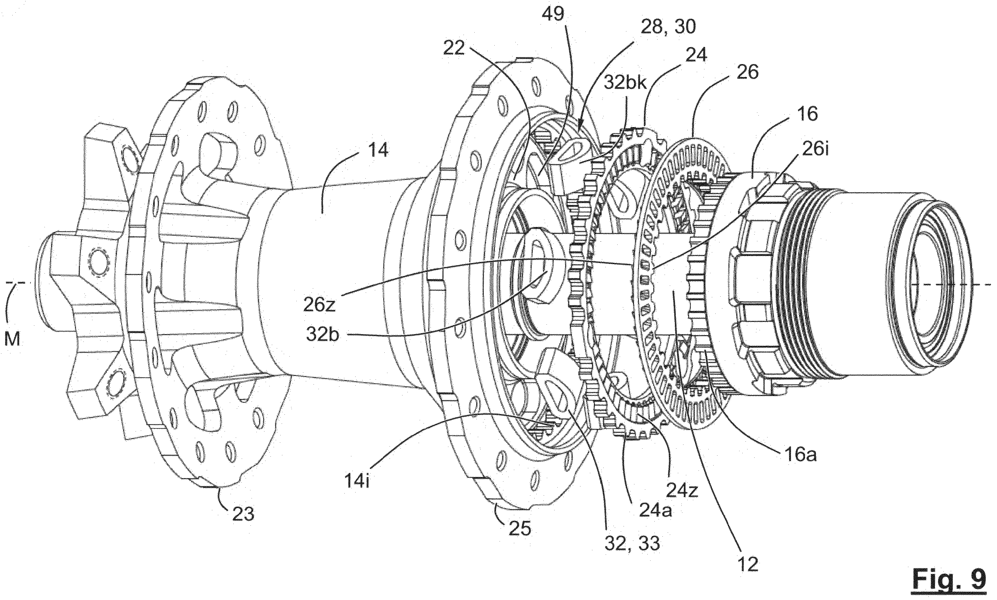

Zur Realisierung des Freilaufs weisen die beiden Kupplungsringe 24 und 26 weiter in bekannter Weise einander zugewandte Axialverzahnungen 24z, 26z (vgl. Figuren 8 und 9) mit schrägen Gleitflächen auf und sind über die Vorspanneinrichtung 28 axial aufeinander zu vorgespannt.

Mit Ausnahme der konkreten Gestaltung der nachfolgend genauer beschriebenen Vorspanneinrichtung 28 sind der Aufbau und die Funktionsweise des dargestellten Freilaufs bekannt. Beispielsweise wird auf die beiden einleitend genannten Druckschriften verwiesen.

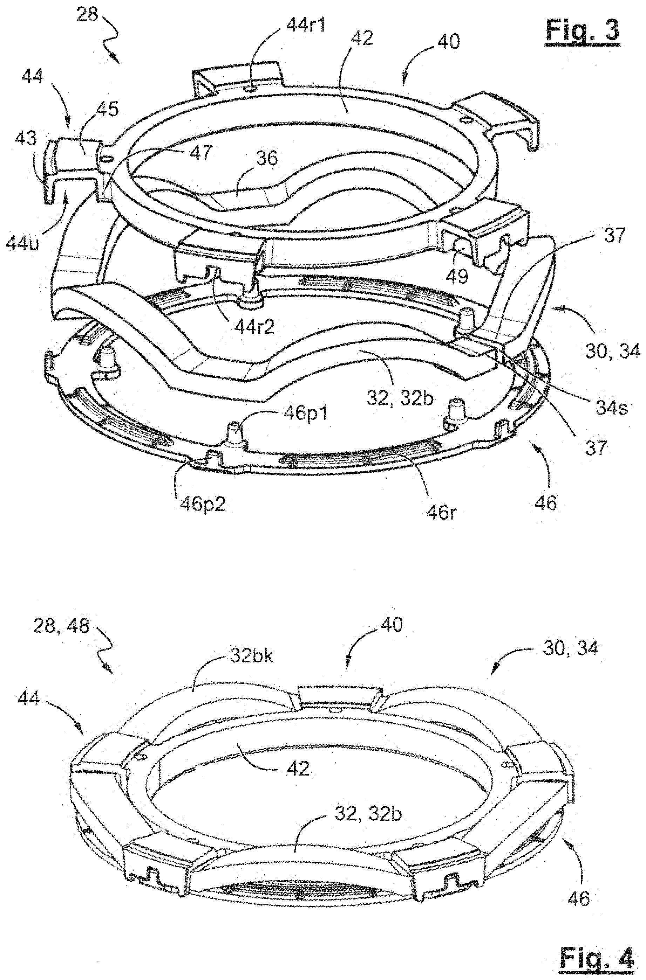

Bei dem ersten Ausführungsbeispiel der Figuren 1 bis 7 ist die Vorspanneinrichtung 28 aus einer Federanordnung 30, einem Haltering 40 und einem Deckelring 46 gebildet, die in Figur 3 in einer Explosionsdarstellung und in Figur 4 in einem zusammengebauten Zustand dargestellt sind, in dem die drei vorgenannten Bauteile eine fest zusammenhängende Baugruppe 48 bilden.

Die Federanordnung 30 umfasst eine Mehrzahl von Federelementen 32, die erfindungsgemäß aus einem Kunststoffmaterial mit zelliger Struktur bestehen, beispielsweise einem Schaumstoff auf Polyurethan-Basis.

Bei dem ersten und zweiten Ausführungsbeispiel der Figuren 1 bis 8 sind die vorliegend fünf gleichartigen Federelemente 32 einstückig in Form eines zusammenhängenden Streifens 34 miteinander verbunden. Der Streifen 34 umfasst eine abwechselnde Anordnung von gleichartigen bogenförmigen Abschnitten 32b, welche die eigentlichen Federelemente 32 bilden, und gleichartigen planaren Abschnitten 36, welche Abstandhalter zwischen den bogenförmigen Abschnitten 32b bilden. An den beiden Längsenden weist der Streifen 34 weiter planare Endabschnitte 37 auf, deren Länge ungefähr die Hälfte der Länge der übrigen planaren Abschnitte 36 oder etwas weniger beträgt.

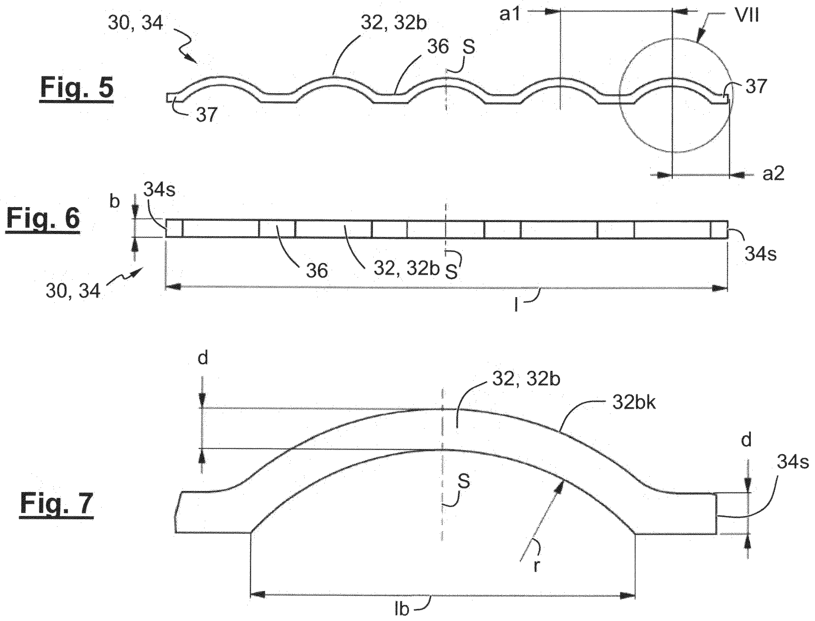

Die genaue Form des Streifens 34, der aus einem plattenförmigen, hinreichend biegsamen Ausgangsmaterial mit zelliger Struktur herausgeschnitten werden kann, ist in den Figuren 5 bis 7 in verschiedenen Ansichten dargestellt. Im dargestellten Beispiel ist die Form des Streifens spiegelsymmetrisch bezüglich einer Symmetrieebene S. Die Figuren 5 bis 7 zeigen den Streifen in einem Ausgangszustand, bevor er um eine Achse parallel zur Dickenrichtung D des Streifens herum gebogen wird.

Die Breite b (vgl. Fig. 6) des Streifens 34 ist bevorzugt konstant über die Länge des Streifens und kann beispielsweise zwischen 3 mm und 5 mm betragen. Beispielsweise kann die Breite b durch die Dicke des plattenförmigen Ausgangsmaterials gegeben sein.

Auch die Dicke d des Streifens ist bevorzugt konstant und beträgt vorzugsweise zwischen 1,5 mm und 2,5 mm, während seine Gesamtlänge I etwa 135 mm bis 139 mm betragen kann. Der innere Bogenradius r der bogenförmigen Abschnitte 32b beträgt beispielsweise zwischen 12 mm und 14 mm, die Länge lb der bogenförmigen Abschnitte beispielsweise zwischen 18 mm und 20 mm. Der Abstand a1 zwischen den Mittelpunkten benachbarter bogenförmiger Abschnitte 32b kann etwa zwischen 26 mm und 29 mm betragen, der Abstand a2 zwischen einem Längsende und dem Mittelpunkt des unmittelbar benachbarten bogenförmigen Abschnitts etwa zwischen 13 mm und 15 mm.

Die einzelnen Größen wie Gesamtlänge, Breite, Dicke und Bogenradius des Streifens sind natürlich auf die Anforderungen des Einzelfalls abzustimmen, also auf die Abmessungen der Freilaufnabe, insbesondere der Kupplungsringe, auf die Eigenschaften des verwendeten zelligen Kunststoffmaterials, die gewünschten Federkräfte und Ähnliches.

Bei dem ersten Ausführungsbeispiel wird der Streifen 34, der die Federanordnung 30 bildet, von Hand um eine Achse parallel zur Dickenrichtung D des Streifens 34 gebogen und in den Haltering 40 eingelegt.

Der am besten in der Explosionsdarstellung der Figur 3 erkennbare Haltering 40 umfasst eine ringförmige Basis 42 sowie fünf radial nach außen von dieser auskragende Halteelemente 44.

Die Halteelemente 44 sind jeweils im Wesentlichen U-förmig ausgebildet, mit einem äußeren Schenkel 43, einer Deckfläche 45 und einem inneren Schenkel 47, der an die Basis 42 angrenzt und einstückig mit dieser verbunden ist. In die hierdurch gebildeten Aufnahmen 44u werden die planaren Abschnitte 36 des Streifens 34 eingelegt bzw. eingeklemmt, wodurch die Positionen der Federelemente 32 relativ zueinander festgelegt werden.

Eines der Halteelemente 44 weist zusätzlich eine innere Trennwand 49 auf, an denen die Stirnflächen 34s des Streifens 34 angelegt werden können, was der Montageerleichterung dient. Ergänzend wird darauf hingewiesen, dass die Schnittebene in Fig. 1 und 2 genau durch diese Trennwand 49 verläuft, die im unteren Teil von Fig. 2 gut zu erkennen ist.

Nach dem Einlegen des Streifens 34 in den Haltering 40 kann der Deckelring 46 an dem Haltering 40 montiert werden. Hierzu sind im vorliegenden Ausführungsbeispiel entsprechende Vorsprünge 46p1 und 46p2 am Deckelring 46 vorgesehen und dazu passende Ausnehmungen 44r1, 44r2 an den Halteelementen 44. Es sind dabei zum Beispiel Presspassungen, Konus-Passungen (wie bei 46p1 und 44r1) oder auch Schnappverbindungen möglich. Der Deckelring 46 ist im vorliegenden Ausführungsbeispiel als flache Ringscheibe ausgebildet, die neben den Strukturen zur Befestigung am Haltering noch einige Rippenstrukturen 46r zur Erhöhung der Steifigkeit aufweist.

Wenn die Vorspanneinrichtung 28 fertig zusammengesetzt ist, wie in Fig. 4 gezeigt, sind die planaren Abschnitte 36 der Federanordnung 30 fest zwischen dem Haltering 40 und dem Deckelring 46 aufgenommen und die Vorspanneinrichtung 28 kann in einfacher Weise als Ersatzteil gehandhabt werden. Die Gefahr, dass sich der Streifen 34 bei der Montage an der Nabenhülse 14 in unerwünschter Weise verbiegt, ist minimiert.

Haltering 40 und Deckelring 46 können aus einem geeigneten Kunststoffmaterial hergestellt sein, beispielsweise durch Spritzgießen.

Im zusammengebauten Zustand der Freilaufnabe 10 drückt die konvexe Seite 32bk von jedem der bogenförmigen Abschnitte 32 in axialer Richtung gegen den ersten Kupplungsring 24, um diesen auf den zweiten Kupplungsring 26 zu vorzuspannen. Durch die verhältnismäßig große Anzahl und gleichmäßige Verteilung der Berührungspunkte zwischen der Federanordnung 30 und dem ersten Kupplungsring 24 um die Nabenachse 12, kann die Anfederung gleichmäßig auf die Kupplungsringe 24, 26 aufgebracht werden. Bevorzugt ist der Federstreifen so gestaltet, dass nur die Biegesteifigkeit, nicht die Kompression des Kunststoffs die für den Freilauf benötigten Federkräfte hervorbringt, die zellige Struktur im Betrieb als nicht wesentlich zusammengedrückt wird. Es wird davon ausgegangen, dass die zellige Struktur die Biegesteifigkeit der Federanordnung in geeigneter Weise verringert.

Es ist auch möglich, den Deckelring 46 wegzulassen, wobei in diesem Fall eine (nicht dargestellte) einfachere Variante des Halterings verwendet werden kann, da die Strukturen zur Befestigung am Deckelring in diesem Fall nicht notwendig sind.

Auch ist es möglich, allerdings in der Montage etwas anspruchsvoller, nur den Streifen 34 als Vorspanneinrichtung 28 (also ohne Haltering und Deckelring) in die Nut 22 der Nabenhülse 14 einzulegen, wie im zweiten Ausführungsbeispiel in Figur 8 gezeigt ist.

Aus Gründen der Übersichtlichkeit wurde in den Darstellungen des zweiten und dritten Ausführungsbeispiels in den Figuren 8 und 9 jeweils insbesondere auf die Darstellung des Verschlusselements 31 (vgl. Fig. 1) verzichtet.

Anstelle eines einstückig ausgebildeten Streifens können auch mehrere separate Federelemente 32 verwendet werden, etwa in Form von separaten D-Ringen 33, wie im dritten Ausführungsbeispiel in Figur 9 illustriert ist. Auch solche D-Ringe 33 können aus geeigneten Schaumstoff-Platten mit wenig Aufwand herausgeschnitten werden. Alternativ könnten auch einzelne, separate Federelemente verwendet werden, deren Aussehen in etwa der Figur 7 entspricht, die also jeweils einen zentralen bogenförmigen Abschnitt und flach abgewinkelte Längsenden umfassen.

Damit die einzelnen Federelemente 32 im Betrieb der Freilaufnabe 10 nicht in unerwünschter Weise gegeneinander verrutschen, kann vorgesehen sein, dass zum Beispiel in einer axialen Fläche der Nabenhülse 14 entsprechende Vertiefungen 49 vorgesehen sind, in welche die Federelemente 32 eingesetzt oder eingeklemmt werden können, was allerdings den Zerspanungsaufwand für die Nabenhülse 14 erhöht. Alternativ kann auch für separate Federelemente ein geeignet ausgebildeter Haltering verwendet werden, der die Federelemente in ihrer Relativposition zueinander fixiert

## Patentansprüche

1. Freilaufnabe (10) für ein Fahrrad, umfassend:
eine Nabenachse (12),
eine drehbar an der Nabenachse (12) gelagerte Nabenhülse (14),
einen drehbar an der Nabenachse (12) gelagerten Antreiber (16), der mit wenigstens einer Ritzelanordnung verbindbar ist,
eine zwischen der Nabenhülse (14) und dem Antreiber (16) angeordnete Freilaufeinrichtung (18), umfassend:
einen drehmomentübertragend mit der Nabenhülse (14) koppelbaren oder gekoppelten ersten Kupplungsring (24),
einen drehmomentübertragend mit dem Antreiber (16) koppelbaren oder gekoppelten zweiten Kupplungsring (26),
wobei die beiden Kupplungsringe (24, 26) einander zugewandte Axialverzahnungen (24z, 26z) aufweisen,
eine Vorspanneinrichtung (28), welche dazu ausgebildet und angeordnet ist, die beiden Kupplungsringe (24, 26) axial aufeinander zu vorzuspannen, wobei die Vorspanneinrichtung (28) eine Federanordnung (30) mit wenigstens einem Federelement (32) aufweist,
und das Federelement (32) aus einem Kunststoff mit zelliger Struktur besteht,
**dadurch gekennzeichnet, dass** das Federelement (32) oder jedes der Federelemente (32) einen bogenförmigen Abschnitt (32b) aufweist, dessen konvexe Seite (32bk) dazu eingerichtet ist, in axialer Richtung gegen einen der Kupplungsringe (24, 26) zu drücken, um die beiden Kupplungsringe (24, 26) gegeneinander vorzuspannen,
wobei mehrere, gleichartige, separat ausgebildete Federelemente (32) gemeinsam die Federanordnung (30) bilden.

2. Freilaufnabe (10) nach Anspruch 1,
**dadurch gekennzeichnet, dass** das Federelement (32) einen Kunststoff auf Polyurethan-Basis umfasst oder aus diesem besteht.

3. Freilaufnabe (10) nach einem der vorhergehenden Ansprüche,
**dadurch gekennzeichnet, dass** die Federanordnung (30) eine Mehrzahl von vorzugsweise gleichartigen Federelementen (32) umfasst, die um den Umfang der Nabenachse (12) verteilt angeordnet sind.

4. Freilaufnabe (10) nach einem der vorhergehenden Ansprüche, **dadurch gekennzeichnet, dass** der bogenförmige Abschnitt (32b) als Streifenabschnitt mit im Wesentlichen konstanter Breite (b) und Dicke (d) ausgebildet ist.

5. Freilaufnabe (10) nach einem der vorhergehenden Ansprüche, **dadurch gekennzeichnet, dass** die Federanordnung (30) so ausgelegt ist, dass bei Anwendung einer Anpresskraft von 0,2N bis 0,5N in axialer Richtung auf die Federanordnung (30) zwar die Federanordnung (30) verbogen, dabei die zellige Struktur des Kunststoffs aber nicht komprimiert wird.

6. Freilaufnabe (10) nach einem der vorhergehenden Ansprüche, **dadurch gekennzeichnet, dass** jedes Federelement (32) als D-Ring (33) oder in Form eines Bogens mit abgewinkelten Längsenden ausgebildet ist.

7. Freilaufnabe (10) nach einem der vorhergehenden Ansprüche, wobei die Federelemente (32) in entsprechende Vertiefungen eingesetzt sind, die in einer axialen Fläche der Nabenhülse (14) oder einer axialen Fläche des Antreibers ausgebildet sind.

8. Freilaufnabe (10) für ein Fahrrad, umfassend:
eine Nabenachse (12),
eine drehbar an der Nabenachse (12) gelagerte Nabenhülse (14),
einen drehbar an der Nabenachse (12) gelagerten Antreiber (16), der mit wenigstens einer Ritzelanordnung verbindbar ist,
eine zwischen der Nabenhülse (14) und dem Antreiber (16) angeordnete Freilaufeinrichtung (18), umfassend:
einen drehmomentübertragend mit der Nabenhülse (14) koppelbaren oder gekoppelten ersten Kupplungsring (24),
einen drehmomentübertragend mit dem Antreiber (16) koppelbaren oder gekoppelten zweiten Kupplungsring (26),
wobei die beiden Kupplungsringe (24, 26) einander zugewandte Axialverzahnungen (24z, 26z) aufweisen,
eine Vorspanneinrichtung (28), welche dazu ausgebildet und angeordnet ist, die beiden Kupplungsringe (24, 26) axial aufeinander zu vorzuspannen, wobei die Vorspanneinrichtung (28) eine Federanordnung (30) mit wenigstens einem Federelement (32) aufweist,
und das Federelement (32) aus einem Kunststoff mit zelliger Struktur besteht,
**dadurch gekennzeichnet, dass** das Federelement (32) oder jedes der Federelemente (32) einen bogenförmigen Abschnitt (32b) aufweist, dessen konvexe Seite (32bk) dazu eingerichtet ist, in axialer Richtung gegen einen der Kupplungsringe (24, 26) zu drücken, um die beiden Kupplungsringe (24, 26) gegeneinander vorzuspannen,
wobei mehrere gleichartige Federelemente (32), die einstückig und
vorzugsweise in Form eines zusammenhängenden Streifens (34) miteinander verbunden sind, die Federanordnung (30) bilden.

9. Freilaufnabe (10) nach einem der vorhergehenden Ansprüche, umfassend eine Mehrzahl von in Umfangsrichtung um die Nabenachse (12) verteilten Federelementen (32), **dadurch gekennzeichnet, dass** die Vorspanneinrichtung (28) weiter einen Haltering (40) aufweist, der dazu ausgebildet ist, die Positionen der Federelemente (32) relativ zueinander festzulegen.

10. Freilaufnabe nach Anspruch 8, **dadurch gekennzeichnet, dass** der Halterring (40) eine ringförmige Basis (42) und mehrere um den Umfang der Basis (42) verteilte und radial von dieser abstehende Halteelemente (44) umfasst, welche die Federanordnung (30) abschnittsweise axial auf einer Seite überdecken und vorzugsweise radial von innen und außen umgreifen.

11. Freilaufnabe nach Anspruch 9 oder 10, **dadurch gekennzeichnet, dass** die Vorspanneinrichtung (28) weiter einen Deckelring (46) umfasst, der so an dem Haltering (40) montierbar ist, dass die Federanordnung (30) wenigstens abschnittsweise zwischen dem Haltering (40) und dem Deckelring (46) aufgenommen ist und gemeinsam mit dem Haltering (40) und dem Deckelring (46) eine fest zusammenhängende Baugruppe (48) bildet.

## Claims

1. Freewheel hub (10) for a bicycle, comprising:
a hub axle (12),
a hub sleeve (14) which is mounted rotatably on the hub axle (12),
a driver (16) which is mounted rotatably on the hub axle (12) and can be connected to at least one sprocket arrangement,
a freewheel device (18) arranged between the hub sleeve (14) and the driver (16), comprising:
a first clutch ring (24), which is coupled or couplable to the hub sleeve (14) in a torque-transmitting manner,
a second clutch ring (26), which is coupled or couplable to the driver (16) in a torque-transmitting manner,
wherein the two clutch rings (24, 26) have mutually facing axial toothings (24z, 26z),
a preload device (28) which is designed and arranged to preload the two clutch rings (24, 26) axially towards one another, wherein the preload device (28) has a spring arrangement (30) with at least one spring element (32),
and the spring element (32) consists of a plastic with a cellular structure, **characterized in that** the spring element (32) or each of the spring elements (32) has an arcuate portion (32b), the convex side (32bk) of which is configured to press against one of the clutch rings (24, 26) in the axial direction, in order to preload the two clutch rings (24, 26) against one another,
wherein a plurality of separately formed spring elements (32) of the same type together form the spring arrangement (30).

2. Freewheel hub (10) according to Claim 1,
**characterized in that** the spring element (32) comprises or consists of a polyurethane-based plastic.

3. Freewheel hub (10) according to either of the preceding claims,
**characterized in that** the spring arrangement (30) comprises a plurality of spring elements (32), preferably of the same type, which are arranged distributed around the circumference of the hub axle (12).

4. Freewheel hub (10) according to one of the preceding claims, **characterized in that** the arcuate portion (32b) is in the form of a strip portion with a substantially constant width (b) and thickness (d).

5. Freewheel hub (10) according to one of the preceding claims, **characterized in that** the spring arrangement (30) is designed such that, although the spring arrangement (30) is deformed when a contact pressure of 0.2 N to 0.5 N is applied to the spring arrangement (30) in the axial direction, the cellular structure of the plastic is not compressed in the process.

6. Freewheel hub (10) according to one of the preceding claims, **characterized in that** each spring element (32) is in the form of a D ring (33) or formed in the shape of an arc with angled-away longitudinal ends.

7. Freewheel hub (10) according to one of the preceding claims, wherein the spring elements (32) are inserted into corresponding depressions formed in an axial surface of the hub sleeve (14) or an axial surface of the driver.

8. Freewheel hub (10) for a bicycle, comprising:
a hub axle (12),
a hub sleeve (14) which is mounted rotatably on the hub axle (12),
a driver (16) which is mounted rotatably on the hub axle (12) and can be connected to at least one sprocket arrangement,
a freewheel device (18) arranged between the hub sleeve (14) and the driver (16), comprising:
a first clutch ring (24), which is coupled or couplable to the hub sleeve (14) in a torque-transmitting manner,
a second clutch ring (26), which is coupled or couplable to the driver (16) in a torque-transmitting manner,
wherein the two clutch rings (24, 26) have mutually facing axial toothings (24z, 26z),
a preload device (28) which is designed and arranged to preload the two clutch rings (24, 26) axially towards one another, wherein the preload device (28) has a spring arrangement (30) with at least one spring element (32),
and the spring element (32) consists of a plastic with a cellular structure, **characterized in that** the spring element (32) or each of the spring elements (32) has an arcuate portion (32b), the convex side (32bk) of which is configured to press against one of the clutch rings (24, 26) in the axial direction, in order to preload the two clutch rings (24, 26) against one another,
wherein a plurality of spring elements (32) of the same type, which are connected to one another in one piece and preferably in the form of a cohesive strip (34), form the spring arrangement (30).

9. Freewheel hub (10) according to one of the preceding claims, comprising a plurality of spring elements (32) distributed around the hub axle (12) in the circumferential direction, **characterized in that** the preload device (28) also has a retaining ring (40), which is designed to fix the positions of the spring elements (32) relative to one another.

10. Freewheel hub according to Claim 8, **characterized in that** the retaining ring (40) comprises an annular base (42) and a plurality of retaining elements (44) which are distributed around the circumference of the base (42), protrude radially from said base, cover the spring arrangement (30) axially on one side in certain portions and preferably engage around the spring arrangement radially from the inside and outside.

11. Freewheel hub according to Claim 9 or 10, **characterized in that** the preload device (28) also comprises a cover ring (46), which can be mounted on the retaining ring (40) such that the spring arrangement (30) is received at least in certain portions between the retaining ring (40) and the cover ring (46) and, together with the retaining ring (40) and the cover ring (46), forms a solidly cohesive assembly (48).

## Revendications

1. Moyeu à roue libre (10) pour une bicyclette, comprenant :
un axe de moyeu (12),
un manchon de moyeu (14) monté de manière rotative sur l'axe de moyeu (12),
un entraîneur (16) monté de manière rotative sur l'axe de moyeu (12), qui peut être relié à au moins un agencement de pignon,
un appareil de roue libre (18) agencé entre le manchon de moyeu (14) et l'entraîneur (16), comprenant :
une première bague d'accouplement (24) pouvant être couplée ou couplée au manchon de moyeu (14) de manière à transmettre le couple,
une deuxième bague d'accouplement (26) pouvant être couplée ou couplée à l'entraîneur (16) de manière à transmettre le couple,
les deux bagues d'accouplement (24, 26) présentant des dentures axiales (24z, 26z) se faisant face,
un appareil de précontrainte (28) configuré et agencé pour précontraindre les deux bagues d'accouplement (24, 26) axialement l'une vers l'autre, l'appareil de précontrainte (28) présentant un agencement de ressort (30) avec au moins un élément de ressort (32),
et l'élément de ressort (32) étant constitué d'une matière plastique à structure cellulaire, **caractérisé en ce que** l'élément de ressort (32) ou chacun des éléments de ressort (32) présente une section arquée (32b) dont le côté convexe (32bk) est adapté pour être pressé dans la direction axiale contre l'une des bagues d'accouplement (24, 26) afin de précontraindre les deux bagues d'accouplement (24, 26) l'une contre l'autre,
plusieurs éléments de ressort (32) de même type, réalisés séparément, formant ensemble l'agencement de ressort (30).

2. Moyeu à roue libre (10) selon la revendication 1,
**caractérisé en ce que** l'élément de ressort (32) comprend ou est constitué d'une matière plastique à base de polyuréthane.

3. Moyeu à roue libre (10) selon l'une quelconque des revendications précédentes,
**caractérisé en ce que** l'agencement de ressort (30) comprend une pluralité d'éléments de ressort (32), de préférence de même type, qui sont agencés en étant répartis autour de la circonférence de l'axe de moyeu (12).

4. Moyeu à roue libre (10) selon l'une quelconque des revendications précédentes, **caractérisé en ce que** la section arquée (32b) est une section de bande de largeur (b) et d'épaisseur (d) essentiellement constantes.

5. Moyeu à roue libre (10) selon l'une quelconque des revendications précédentes, **caractérisé en ce que** l'agencement de ressort (30) est conçu de telle sorte que, lors de l'application d'une force de pression de 0,2 N à 0,5 N dans la direction axiale sur l'agencement de ressort (30), l'agencement de ressort (30) est déformé mais la structure cellulaire de la matière plastique n'est pas comprimée.

6. Moyeu à roue libre (10) selon l'une quelconque des revendications précédentes, **caractérisé en ce que** chaque élément de ressort (32) se présente sous la forme d'une bague en D (33) ou d'un arc avec des extrémités longitudinales coudées.

7. Moyeu à roue libre (10) selon l'une quelconque des revendications précédentes, dans lequel les éléments à ressort (32) sont insérés dans des cavités correspondantes réalisées dans une surface axiale du manchon de moyeu (14) ou une surface axiale de l'entraîneur.

8. Moyeu à roue libre (10) pour une bicyclette, comprenant :
un axe de moyeu (12),
un manchon de moyeu (14) monté de manière rotative sur l'axe de moyeu (12),
un entraîneur (16) monté de manière rotative sur l'axe de moyeu (12), qui peut être relié à au moins un agencement de pignon,
un appareil de roue libre (18) agencé entre le manchon de moyeu (14) et l'entraîneur (16), comprenant :
une première bague d'accouplement (24) pouvant être couplée ou couplée au manchon de moyeu (14) de manière à transmettre le couple,
une deuxième bague d'accouplement (26) pouvant être couplée ou couplée à l'entraîneur (16) de manière à transmettre le couple,
les deux bagues d'accouplement (24, 26) présentant des dentures axiales (24z, 26z) se faisant face,
un appareil de précontrainte (28) configuré et agencé pour précontraindre les deux bagues d'accouplement (24, 26) axialement l'une vers l'autre, l'appareil de précontrainte (28) présentant un agencement de ressort (30) avec au moins un élément de ressort (32),
et l'élément de ressort (32) étant constitué d'une matière plastique à structure cellulaire, **caractérisé en ce que** l'élément de ressort (32) ou chacun des éléments de ressort (32) présente une section arquée (32b) dont le côté convexe (32bk) est adapté pour être pressé dans la direction axiale contre l'une des bagues d'accouplement (24, 26) afin de précontraindre les deux bagues d'accouplement (24, 26) l'une contre l'autre,
plusieurs éléments de ressort (32) de même type, reliés entre eux d'un seul tenant et de préférence sous la forme d'une bande (34) cohérente, formant l'agencement de ressort (30).

9. Moyeu à roue libre (10) selon l'une quelconque des revendications précédentes, comprenant une pluralité d'éléments de ressort (32) répartis dans la direction circonférentielle autour de l'axe de moyeu (12), **caractérisé en ce que** le dispositif de précontrainte (28) présente en outre une bague de retenue (40) réalisée pour fixer les positions des éléments de ressort (32) les uns par rapport aux autres.

10. Moyeu à roue libre selon la revendication 8, **caractérisé en ce que** la bague de retenue (40) comprend une base annulaire (42) et plusieurs éléments de retenue (44) répartis autour de la circonférence de la base (42) et s'étendant radialement à partir de celle-ci, qui recouvrent l'agencement de ressort (30) par sections axialement sur un côté et l'entourent de préférence radialement de l'intérieur et de l'extérieur.

11. Moyeu à roue libre selon la revendication 9 ou 10, **caractérisé en ce que** le dispositif de précontrainte (28) comprend en outre une bague de couvercle (46) qui peut être montée sur la bague de retenue (40) de telle sorte que l'agencement de ressort (30) est logé au moins par sections entre la bague de retenue (40) et la bague de couvercle (46) et forme conjointement avec la bague de retenue (40) et la bague de couvercle (46) un sous-ensemble (48) cohérent de manière fixe.
